# EUROPÄISCHE PATENTSCHRIFT

(11) **EP 2 652 297 B1**
(45) Veröffentlichungstag und Bekanntmachung des Hinweises auf die Patenterteilung: **07.01.2015**
(21) Anmeldenummer: 11787681.3
(22) Anmeldetag: 23.11.2011
(51) Int. Cl.: F02D 41/14

(54) **VERFAHREN ZUR ERKENNUNG DER BETRIEBSBEREITSCHAFT EINER SPRUNG-LAMBDASONDE**
METHOD FOR DETECTING THE OPERATIONAL READINESS OF A JUMP LAMBDA SENSOR
PROCÉDÉ DE DÉTECTION DE LA CAPACITÉ À FONCTIONNER D'UNE SONDE LAMBDA À SAUT DE TENSION

(30) Priorität: 15.12.2010 DE 102010063117
(43) Veröffentlichungstag der Anmeldung: 23.10.2013
(73) Patentinhaber: Robert Bosch GmbH, 70442 Stuttgart (DE)
(72) Erfinder: FEY, Michael, 75446 Wiernsheim (DE)
(86) Internationale Anmeldenummer: PCT/EP2011/070787
(87) Internationale Veröffentlichungsnummer: WO 2012/079934

(56) Entgegenhaltungen:
- EP-A2- 1 637 719
- DE-A1- 19 636 226
- DE-A1-102005 005 764
- US-A1- 2010 154 525

## Beschreibung

Die vorliegende Erfindung betrifft ein Verfahren zur Erkennung der Betriebsbereitschaft einer Sprung-Lambdasonde, wobei der Innenwiderstand der Sonde als Kriterium für die Betriebsbereitschaft der Sonde gemessen wird.

### Stand der Technik

Zur Erfassung der Sauerstoffkonzentration im Abgas einer Brennkraftmaschine werden in heutigen Motorsteuerungssystemen Lambdasonden eingesetzt. Mittels der Lambdasonden wird die Sauerstoffkonzentration im Abgas der Brennkraftmaschine bestimmt, sodass über einen Lambda-Regelkreis die Luft- und Kraftstoffzuführung der Brennkraftmaschine derart geregelt werden kann, dass für eine Abgasnachbehandlung durch Katalysatoren, die in dem Abgaskanal der Brennkraftmaschine vorgesehen sind, eine optimale Zusammensetzung des Abgases erreicht werden kann. Ein Verfahren zur Erkennung der Betriebsbereitschaft einer Sprung-Lambdasonde, die einer Brennkraftmaschine zugeordnet ist, ist aus der Patentschrift DE19636226 bekannt.

Es sind verschiedene Formen von Lambdasonden bekannt. Bei einer Zweipunkt-Lambdasonde, die auch als Sprung-Lambdasonde bezeichnet wird, weist die Kennlinie bei λ=1 einen sprungartigen Abfall auf. Eine Sprungsonde erlaubt dabei im Wesentlichen eine Unterscheidung zwischen fettem Abgas bei Betrieb der Brennkraftmaschine mit Kraftstoffüberschuss und magerem Abgas bei Betrieb mit Luftüberschuss. Eine sogenannte Breitband-Lambdasonde, die auch als stetige oder lineare Lambdasonde bezeichnet wird, ist die Messung des Lambdawertes im Abgas in einem weiten Bereich um λ=1 herum möglich. Eine Breitband-Lambdasonde kann daher beispielsweise auch für eine Regelung der Brennkraftmaschine auf einen mageren Betrieb mit Luftüberschuss genutzt werden.

Im Allgemeinen beruht eine Lambdasonde auf einer galvanischen Sauerstoffkonzentrationszelle mit einem Festkörperelektrolyten. Der Festkörperelektrolyt hat die Eigenschaft, bei hoher Temperatur Sauerstoffionen elektrolytisch transportieren zu können, wodurch eine Spannung entsteht. Durch diese Eigenschaft kann der Unterschied des Sauerstoffpartialdrucks zweier verschiedener Gase, also insbesondere dem Abgasstrom und einer Sauerstoffreferenz, bestimmt werden. Der Festkörperelektrolyt wird typischerweise bei einer Aktivierungstemperatur von ca. 350°C für die Sauerstoffionen leitend. Die Nominaltemperatur der Sonde liegt in der Regel deutlich höher, typischerweise zwischen 650°C und 850°C. Die Lambdasonde ist allerdings auch bereits unterhalb der Nominaltemperatur betriebsbereit und erfüllt die Anforderungen des Motorsteuerungssystems. Die Temperatur, bei der die Lambdasonde betriebsbereit wird, liegt also zwischen der Aktivierungstemperatur und der Nominaltemperatur der Sonde.

Sobald die Sonde betriebsbereit ist, kann das Sondensignal für Regel- und Diagnosezwecke verwendet werden. Vor allem kann erst bei einer betriebsbereiten Sonde die Lambdaregelung aktiviert werden. Da eine aktive Lambdaregelung für eine Verringerung der Schadstoffemissionen im Abgas der Brennkraftmaschine entscheidend ist, sollte die Betriebsbereitschaft der Lambdasonde nach dem Motorstart so schnell wie möglich erreicht werden. Weiterhin sollte die Betriebsbereitschaft der Lambdasonde auch so schnell wie möglich erkannt werden.

Im Allgemeinen ist das Kriterium zur Erkennung einer betriebsbereiten Lambdasonde das Überschreiten einer bestimmten Temperaturschwelle der Sonde. Sobald die Sonde heiß genug ist, ist die Betriebsbereitschaft gegeben.

Zur Erkennung der Betriebsbereitschaft wird bei Breitband-Lambdasonden in der Regel die Keramiktemperatur gemessen. Sobald die Keramiktemperatur eine vorgebbare Schwelle überschreitet, kann darauf geschlossen werden, dass die Sonde betriebsbereit ist. Die Messung der Keramiktemperatur kann durch eine direkte oder indirekte Messung erfolgen. Beispielsweise kann durch Messung des Innenwiderstands der Sonde indirekt auf die Temperatur der Sonde rückgeschlossen werden. Nach der Messung des Innenwiderstandes der Sonde wird über eine eindeutige Kennlinie der Messwert in die entsprechende Keramiktemperatur umgerechnet. Die Messung des Innenwiderstands kann durch einen hochfrequenten Wechselstrom, beispielsweise 3 kHz, ab Motorstart erfolgen, ohne dass dabei das Sondensignal unzulässig stark beeinflusst wird. Bei Breitband-Lambdasonden ist hiermit eine praktisch verzögerungsfreie Erkennung der Sondenbetriebsbereitschaft möglich.

Bei Sprung-Lambdasonden steht in der Regel die Keramiktemperatur nicht als Messwert zur Verfügung. Weiterhin ist eine Sprung-Lambdasonde üblicherweise mit einer einfacheren elektrischen Beschaltung ausgestattet, die keine hochfrequente Wechselstrommessung des Innenwiderstands ab Motorstart erlaubt. Daher wird bei Sprung-Lambdasonden üblicherweise der Innenwiderstand durch Belastung der Sonde mit einem pulsförmigen Strom gemessen. Aus dem derart gemessenen Innenwiderstand wird auf die Keramiktemperatur insbesondere anhand einer entsprechenden Kennlinie geschlossen. Der pulsförmige Strom zur Messung des Innenwiderstandes führt allerdings zu einer Verzerrung des Sondensignals durch die damit einhergehende Polarisation der Sonde. Diese Polarisation bewirkt an der Sonde eine Spannung, die höher ist, als aufgrund des Abgaslambdas zu erwarten wäre. Die Polarisation wirkt sich insbesondere bei kalter Sonde besonders stark aus und klingt bei kalter Sonde auch nur langsam ab. Wenn die Polarisation bis zum nächsten Belastungspuls nicht vollständig abgeklungen ist, kann es zu einem weiteren Aufschaukeln der Sondenspannung kommen, sodass das Sondensignal nicht mehr verwertbar ist. Der Innenwiderstand einer Sprung-Lambdasonde wird daher im Allgemeinen erst dann gemessen, wenn die Sonde ausreichend heiß ist, d.h. im Allgemeinen erst nach Erreichen der Sondenbetriebsbereitschaft. Die Innenwiderstandsmessung durch einen pulsförmigen Strom kann daher nicht zur eigentlichen Erkennung der Betriebsbereitschaft herangezogen werden.

Zur Erkennung der Sondenbetriebsbereitschaft bei Sprung-Lambdasonden ist ein anderes indirektes Verfahren bekannt. Hierbei wird die Sondenbetriebsbereitschaft erkannt, wenn die Sondenspannung eine definierte Ruhelage verlässt, wobei der Grad einer Abweichung zwischen der Sondenspannung und einer Gegenspannung als Maß für die Temperatur der Sonde bestimmt wird. Zu diesem Zweck wird eine Spannungsquelle im Steuergerät der Brennkraftmaschine, die eine konstante Gegenspannung erzeugt, eingesetzt und parallel zur Sonde geschaltet. Die Ausgangsspannung der Parallelschaltung wird gemessen und stellt eine Überlagerung der Sondenspannung und der Gegenspannung dar, wobei die Spannung der Spannungsquelle mit dem geringeren Innenwiderstand überwiegt. Eine kalte Sonde hat einen hohen Innenwiderstand, sodass die Gegenspannung dominiert. Eine heiße Sonde hat einen kleinen Innenwiderstand, sodass in diesem Fall die Sondenspannung dominiert. Wenn also die messbare Spannung der Parallelschaltung von der Gegenspannung abweicht, kann hieraus auf eine heiße Sonde geschlossen werden. Sobald die Abweichung eine vorgebbare Schwelle überschreitet, kann damit die Sondenbetriebsbereitschaft erkannt werden. Der Vorteil dieses Verfahrens ist, dass dieses passive Verfahren die Sondenspannung nicht beeinflusst. Allerdings ist die Sondenspannung auch von der aktuellen Abgaszusammensetzung abhängig, sodass dies auch einen Einfluss auf den Grad der Abweichung zwischen Sondenspannung und Gegenspannung ausübt. Abhängig vom Abgaslambda wird daher die Sondenbetriebsbereitschaft mit diesem Verfahren unterschiedlich schnell erkannt, sodass es zu einer Verzögerung der Erkennung der Betriebsbereitschaft mit einer nachteiligen Wirkung auf die Abgasnachbehandlung durch zu späte Aktivierung der Lambdaregelung kommt. Weiterhin ist hierbei nachteilig, dass ein Sondenfehler fälschlicherweise als eine betriebsbereite Sonde interpretiert werden kann, da eine Abweichung der Sondenspannung von der Gegenspannung auch durch einen Sondenfehler verursacht sein kann. Um die Robustheit dieses Verfahrens zu erhöhen, werden daher bereits zusätzliche Kriterien herangezogen, die Rückschlüsse auf die Sondenbetriebsbereitschaft erlauben, z.B. der Heizungsstatus oder die der Sonde seit dem Motorstart zugeführte Wärmemenge. Durch die Berücksichtigung dieser zusätzlichen Kriterien wird allerdings die Erkennung der Sondenbetriebsbereitschaft weiter verzögert mit den damit einhergehenden Nachteilen für die Abgasnachbehandlung und die entstehenden Emissionen.

Der Erfindung liegt daher die Aufgabe zugrunde, ein verbessertes Verfahren zur Erkennung der Betriebsbereitschaft einer Sprung-Lambdasonde bereitzustellen. Dieses Verfahren soll sicher und schnell die Betriebsbereitschaft der Sprung-Lambdasonde erkennen, ohne das Sondensignal nachteilig zu beeinflussen. Diese Aufgabe wird durch ein Verfahren zur Erkennung der Betriebsbereitschaft einer Sprung-Lambdasonde gelöst, wie es Gegenstand des Anspruchs 1 ist. Bevorzugte Ausgestaltungen dieses Verfahrens ergeben sich aus den abhängigen Ansprüchen.

### Offenbarung der Erfindung

### Vorteile der Erfindung

Das erfindungsgemäße Verfahren zur Erkennung der Betriebsbereitschaft einer Sprung-Lambdasonde nutzt eine Messung des Innenwiderstands der Sonde als Kriterium für die Betriebsbereitschaft der Sonde. Der Innenwiderstand einer Sonde hängt direkt von der Temperatur der Sondenkeramik ab und kann daher als Maß für die Sondentemperatur herangezogen werden. Da die Betriebsbereitschaft der Sonde von der Temperatur des Festkörperelektrolyten abhängt, kann der messbare Innenwiderstand als Kriterium für die Sondenbetriebsbereitschaft genutzt werden. Mit zunehmender Temperatur sinkt der Innenwiderstand. Insbesondere kann daher die Sondenbetriebsbereitschaft erkannt werden, wenn der Innenwiderstand eine vorgebbare Schwelle unterschreitet. Erfindungsgemäß wird der Innenwiderstand durch Beaufschlagung der Sonde mit einem gepulsten Strom gemessen, wobei die Frequenz des gepulsten Stroms in Abhängigkeit von dem Zustand der Sonde gewählt wird. Bei dem gepulsten Strom handelt es sich nicht um einen Wechselstrom in dem Sinne, dass der Strom seine Richtung bzw. seine Polung ändern würde. Vielmehr handelt es sich um einen pulsförmigen Strom mit zu verändernder Frequenz, bei dem beispielsweise die Einschaltzeiten konstant bleiben, während die Ausschaltzeiten abhängig vom Zustand der Sonde verändert werden. Eine höhere Frequenz bedeutet also insbesondere kürzere Ausschaltzeiten bei konstanter Pulsdauer, sodass die Pulse in kürzeren Abständen aufeinanderfolgen. Die Beaufschlagung einer Sprung-Lambdasonde mit einem derartigen gepulsten Strom ist in der Regel mit der üblichen elektrischen Beschaltung einer Sprung-Lambdasonde möglich, sodass das erfindungsgemäße Verfahren keine weiteren Hardware-Komponenten erfordert und auf die ohnehin vorhandene elektrische Beschaltung zurückgreifen kann.

Vorzugsweise wird eine niedrige und/oder eine höhere und/oder eine weiter erhöhte Frequenz in Abhängigkeit von dem Zustand der Sonde gewählt. Die Wahl der Frequenz des gepulsten Stroms in Abhängigkeit von dem Zustand der Sonde, insbesondere in Abhängigkeit von der Temperatur der Sonde, hat den Vorteil, dass die durch das Anlegen der Strompulse verursachten Polarisationseffekte in der Sonde berücksichtigt werden können. Insbesondere bei einer kalten Sonde sind die Polarisationseffekte verhältnismäßig stark und dauern verhältnismäßig lange an, sodass bei einer kalten Sonde die Frequenz der Strompulse vorzugsweise niedrig gewählt wird und es so nicht zu einem Aufsummieren der Polarisationseffekte kommt.

In einer bevorzugten Ausgestaltung des erfindungsgemäßen Verfahrens wird nach dem Start der Brennkraftmaschine der Innenwiderstand der Sonde mit einer niedrigen Frequenz des gepulsten Stroms gemessen. Die niedrige Frequenz der angelegten Strompulse bewirkt, dass die verursachte Polarisation abklingen kann, bevor ein erneuter Impuls die Sonde erreicht. Dies hat den Vorteil, dass es nicht zu einer "Aufschaukelung" der verursachten Polarisationen in der Sonde kommt. Die hierbei erzielten Messwerte werden dahingehend überprüft, ob eine kurz bevorstehende Betriebsbereitschaft der Sonde vorliegt, d.h. also, ob die für die Betriebsbereitschaft der Sonde erforderliche Temperatur fast erreicht ist. Sobald der gemessene Innenwiderstand hierauf schließen lässt, wird die Innenwiderstandsmessung mit einer höheren Frequenz der Strompulse durchgeführt. In diesem Zustand der Sonde ist die Temperatur der Keramik bereits so hoch, dass sich die durch die Strompulse verursachten Polarisationen nicht stark auswirken. Hierdurch wird das Sondensignal also nicht unnötig verzerrt. Durch die höhere Frequenz der Messung werden die Veränderungen der Sonde sehr schnell erfasst, sodass das Unterschreiten eines vorgebbaren Schwellenwerts des Innenwiderstands ohne Verzögerung erkannt wird. Sobald die vorgebbare Schwelle unterschritten wird, kann daher auf das Erreichen der Betriebsbereitschaft der Sonde geschlossen werden. Diese erfindungsgemäße Anpassung der Frequenz der Innenwiderstandsmessung bzw. des angelegten gepulsten Stroms für die Messung des Innenwiderstands hat den Vorteil, dass die bei verhältnismäßig kalter Sonde hierdurch bewirkten Polarisationseffekte der Sonde auf ein Mindestmaß beschränkt werden. Durch die Erhöhung der Frequenz bei angestiegener Temperatur der Sonde wird die Temperaturerhöhung der Sonde nahezu verzögerungsfrei erkannt. In diesem Zustand der Sonde sind die Polarisationseffekte deutlich schwächer ausgeprägt und führen nicht zu einer maßgeblichen Verzerrung oder Störung des Signals, sodass die höhere Frequenz der Strompulse in diesem Zustand der Sonde nicht nachteilig ist.

In einer besonders bevorzugten Ausgestaltung des erfindungsgemäßen Verfahrens erfolgt die erste Innenwiderstandsmessung erst, wenn eine oder mehrere Messgrößen und/oder modulierte Größen darauf hindeuten, dass die Sonde eine bestimmte Mindesttemperatur erreicht hat. Sobald auf eine vorgebbare Mindesttemperatur der Sonde geschlossen werden kann, wird der Innenwiderstand erstmals mit einer niedrigen Frequenz des gepulsten Stroms gemessen. Durch die bereits erreichte Mindesttemperatur der Sonde sind die durch die angelegten Strompulse verursachte Polarisationen der Sonde nicht sehr stark und langanhaltend, sodass das Sondensignal hierdurch nicht unnötig stark verzerrt wird.

In besonders bevorzugter Weise kann eine Plausibilisierung des Rückschlusses auf die erreichte Betriebsbereitschaft der Sonde durchgeführt werden, indem nach dem ersten Rückschluss auf das Erreichen der Betriebsbereitschaft die Frequenz der Strompulse zur Innenwiderstandsmessung weiter erhöht wird und die hierbei ermittelten Innenwiderstandswerte zum Rückschluss auf die erreichte Temperatur der Sonde genutzt werden. Hierdurch kann in sehr schneller Weise ohne relevante Verzögerung die Erkennung der Betriebsbereitschaft abgesichert werden.

Nach dem Rückschluss auf das Erreichen der Betriebsbereitschaft der Sonde kann der Innenwiderstand im Weiteren mit einer niedrigen Frequenz gemessen werden. Dies ist im Allgemeinen ausreichend, um weitere Veränderungen des Zustands der Sonde zu erfassen, insbesondere im Hinblick auf die Sondentemperatur. Die niedrige Messfrequenz stellt hierbei sicher, dass der Einfluss der angelegten Strompulse auf das Sondensignal, insbesondere die hierdurch verursachten Polarisationen, so gering wie möglich gehalten wird. Insbesondere kommt es durch die niedrige Frequenz nicht zu einer Überlagerung der Polarisationen, wobei bei diesem Zustand der Sonde, bzw. bei der erreichten Temperatur der Sonde die Polarisationseffekte ohnehin gering sind.

Die Wahl der jeweiligen Frequenzen des gepulsten Stroms für die Innenwiderstandsmessung, also insbesondere die niedrige Frequenz, die höhere Frequenz und die weiter erhöhte Frequenz, ist abhängig von der jeweiligen Ausgestaltung und Geometrie der Sprungsonde. Beispielsweise kann die niedrige Frequenz bei einer üblichen Sprungsonde ca. 0,5 bis ca. 5 Hz betragen, vorzugsweise ca. 1 bis ca. 3 Hz. Besonders bevorzugt ist eine niedrige Frequenz von 2 Hz. Die höhere Frequenz kann beispielsweise zwischen ca. 5,5 bis ca. 15 Hz liegen, vorzugsweise zwischen ca. 8 bis ca. 12 Hz. Besonders bevorzugt ist 10 Hz. Die weiter erhöhte Frequenz kann zwischen ca. 15,5 und ca. 25 Hz, vorzugsweise zwisehen ca. 18 bis ca. 22 Hz liegen. Besonders bevorzugt ist 20 Hz. Je nach Ausgestaltung der jeweiligen Sonde können diese Frequenzen auch variieren.

Wie beschrieben erfolgt in einer bevorzugten Ausgestaltung des erfindungsgemäßen Verfahrens vor der eigentlichen Aktivierung der Innenwiderstandsmessung eine Überprüfung von ein oder mehreren Messgrößen und/oder modellierten Größen dahingehend, ob eine vorgebbare Mindesttemperatur der Sonde erreicht ist. Bei diesen Größen kann es sich um Absolutwerte, Gradienten und/oder Integrale von Abgaskenngrößen, wie beispielsweise Abgastemperatur und/oder Abgasmassenströmen, oder von Sondenkenngrößen wie beispielsweise der Sondenspannung handeln. Aus diesen Werten, die oftmals in einem Steuergerät der Brennkraftmaschine verfügbar sind, kann eine erste Aussage über die Temperatur der Sonde getroffen werden. Hierdurch wird sichergestellt, dass die nachfolgende Innenwiderstandsmessung nicht zu unnötig starken Polarisationseffekten der Sonde führt, die im Allgemeinen nur bei einer kalten Sonde auftreten. Sobald diese Messgrößen oder modellierten Größen darauf schließen lassen, dass die Sonde bereits eine Mindesttemperatur erreicht hat, beispielsweise ca. 600°C, sind die Polarisationseffekte durch die Innenwiderstandsmessung nicht mehr so stark, sodass hierdurch das Sondensignal nicht unnötig gestört wird. In dieser ersten Phase kann beispielsweise auch bereits eine Innenwiderstandsmessung durchgeführt werden, die mit einer sehr geringen Frequenz der Strompulse durchgeführt wird, beispielsweise 1 Hz. Durch diese sehr niedrige Frequenz ist der Polarisationseffekt auf die Sonde auf der einen Seite vertretbar und auf der anderen Seite kann anhand dieser Innenwiderstandsmessung die Temperatur der Sonde auf sehr einfache Weise bestimmt werden.

Für den Rückschluss auf das Erreichen der Betriebsbereitschaft der Sonde wird vorzugsweise geprüft, ob der gemessene Innenwiderstand eine vorgebbare Schwelle unterschreitet. Da der Innenwiderstand der Sonde direkt mit der Sondentemperatur bzw. der Keramiktemperatur der Sonde zusammenhängt, kann beispielsweise anhand einer entsprechenden Kennlinie aus dem gemessenen Innenwiderstandswert auf die Sondentemperatur geschlossen werden, die wiederum direkt mit der Betriebsbereitschaft der Sonde zusammenhängt. Vorzugsweise wird erst dann auf das Erreichen der Betriebsbereitschaft geschlossen, wenn die vorgebbare Schwelle bei mehreren Messungen unterschritten wurde, insbesondere bei mehreren aufeinanderfolgenden Messungen. Hierdurch wird die Robustheit des erfindungsgemäßen Verfahrens weiter erhöht, da ein einmaliger Messfehler nicht zu einem falschen Rückschluss auf die Betriebsbereitschaft der Sonde führt. In einer besonders bevorzugten Ausführungsform wird nach einem erstmaligen Unterschreiten der vorgebbaren Schwelle die Frequenz der Strompulse für die Innenwiderstandsmessung erhöht. Hierdurch kann die Geschwindigkeit der Erkennung der Betriebsbereitschaft weiter erhöht werden, da in schnellerer Folge Messergebnisse generiert werden, sodass die Betriebsbereitschaft der Lambdasonde nahezu verzögerungsfrei erkannt bzw. plausibilisiert werden kann.

Insgesamt verwendet das erfindungsgemäße Verfahren mit der Innenwiderstandsmessung ein Kriterium für die Betriebsbereitschaft der Sonde, das direkt mit der Sensorelementtemperatur korreliert. Dieses Kriterium wird anhand mehrerer schnell aufeinanderfolgender Messungen überprüft, um die Betriebsbereitschaft der Sonde erkennen zu können. Es sind keine verzögernden Zusatzkriterien oder aufwendige Plausibilisierungen erforderlich, sodass das erfindungsgemäße Verfahren die Betriebsbereitschaft der Sonde sehr schnell und zuverlässig erkennen kann. Ein besonderer Vorteil des erfindungsgemäßen Verfahrens ist, dass die Erkennung der Sondenbetriebsbereitschaft unabhängig von der Abgaszusammensetzung ist. Bei herkömmlichen Betriebsbereitschaftserkennungsverfahren, die beispielsweise die Sondenspannung in Bezug auf eine Gegenspannung auswerten, kann es zu einer Verzögerung der Erkennung der Sondenbetriebsbereitschaft kommen, wenn sich das Abgaslambda verändert. Dies ist bei dem erfindungsgemäßen Verfahren ausgeschlossen, da das Kriterium für das erfindungsgemäße Verfahren ausschließlich die Temperatur der Sondenkeramik bzw. der damit korrelierende Innenwiderstand der Sonde ist, was unabhängig von der Abgaszusammensetzung ist. Bei dem erfindungsgemäßen Verfahren kommt es also zu keinen Verzögerungen in der Erkennung der Betriebsbereitschaft, falls die Abgaszusammensetzung schwankt. Auch können bei dem erfindungsgemäßen Verfahren Sondenfehler nicht fälschlicherweise als betriebsbereite Sonde interpretiert werden, wie es bei aus dem Stand der Technik bekannten Verfahren möglich ist.

Das erfindungsgemäße Verfahren nutzt das sehr zuverlässige Kriterium des Innenwiderstands der Sonde als Maß für die Sondentemperatur und damit für die Betriebsbereitschaft der Sonde, wobei die durch die Innenwiderstandsmessung verursachten Polarisationseffekte in der Sonde erfindungsgemäß minimiert werden, indem die Frequenz der angelegten Strompulse zur Innenwiderstandsmessung an den Zustand der Sonde angepasst wird. Damit erlaubt das erfindungsgemäße Verfahren eine wesentlich schnellere und zuverlässigere Erkennung der Sondenbetriebsbereitschaft im Vergleich mit herkömmlichen Verfahren, ohne dass das Sondensignal negativ beeinflusst oder verfälscht wird. Dies erlaubt wiederum, die Lambdaregelung zu einem frühest möglichen Zeitpunkt zu aktivieren. Dies führt im Ergebnis zu geringeren Emissionen, da die Phase zwischen Motorstart und Aktivierung der Lambdaregelung so kurz wie möglich gehalten werden kann, wobei insbesondere in dieser Phase die Emissionen überproportional hoch sind.

Die Erfindung umfasst weiterhin ein Computerprogramm, das alle Schritte des erfindungsgemäßen Verfahrens ausführt, wenn es auf einem Rechengerät oder einem Steuergerät ausgeführt wird. Schließlich umfasst die Erfindung ein Computerprogrammprodukt mit Programmcode, der auf einem maschinenlesbaren Träger gespeichert ist, zur Durchführung des erfindungsgemäßen Verfahrens, wenn das Programm auf einem Rechengerät oder einem Steuergerät ausgeführt wird. Bei dem Steuergerät kann es sich beispielsweise um das zentrale Steuergerät eines Kraftfahrzeugs bzw. einer Brennkraftmaschine handeln. Die Ausgestaltung der Erfindung als Computerprogramm oder als Computerprogrammprodukt hat den besonderen Vorteil, dass für den Einsatz des erfindungsgemäßen Verfahrens keine weiteren Komponenten im Kraftfahrzeug verbaut werden müssen. Das erfindungsgemäße Verfahren zur Erkennung der Betriebsbereitschaft einer Sprung-Lambdasonde kann auf die übliche Beschaltung einer Sprung-Lambdasonde zurückgreifen, sodass keine weiteren Komponenten installiert werden müssen. Es ist lediglich erforderlich, beispielsweise das entsprechende Computerprogramm zu implementieren, sodass das erfindungsgemäße Verfahren mit besonderem Vorteil auch bei bestehenden Kraftfahrzeugen eingesetzt werden kann.

Weitere Vorteile und Merkmale der Erfindung ergeben sich aus der nachfolgenden Beschreibung von Ausführungsbeispielen in Verbindung mit der Zeichnung. Hierbei können die einzelnen Merkmale jeweils für sich oder in Kombination miteinander verwirklicht sein.

### Kurze Beschreibung der Zeichnung

### In der Zeichnung zeigt

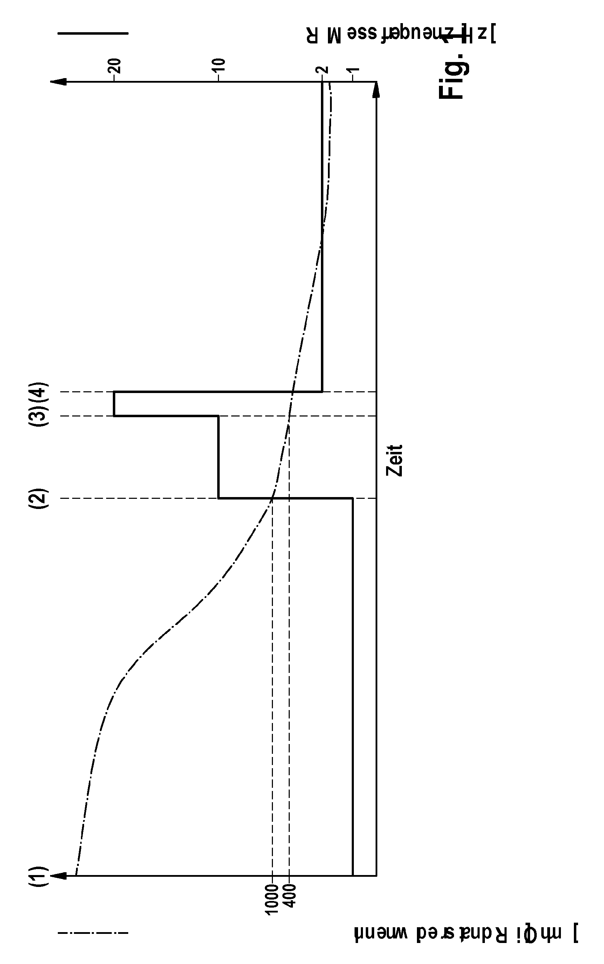

Fig. 1 einen schematischen zeitlichen Ablauf der Betriebsbereitschaftserkennung gemäß dem erfindungsgemäßen Verfahren.

### Beschreibung von Ausführungsbeispielen

Das erfindungsgemäße Verfahren verwendet den Innenwiderstand einer Sprung-Lambdasonde als Kriterium, um das Erreichen der Sondenbetriebsbereitschaft zu erkennen. Zwischen dem Sondeninnenwiderstand und der Sensorelementtemperatur besteht ein eindeutiger Zusammenhang, wobei die Sensorelementtemperatur dann eine bestimmte Temperaturschwelle überschreitet, wenn der Sondeninnenwiderstand gleichzeitig eine entsprechende Widerstandsschwelle unterschreitet. Die Sondenbetriebsbereitschaft ist dann erreicht, wenn der Innenwiderstand der Sonde unter eine bestimmte Schwelle gefallen ist. Erfindungsgemäß wird der Innenwiderstand der Sonde bereits gemessen, bevor die Sonde betriebsbereit ist. Nur durch eine Messung vor der Betriebsbereitschaft der Sonde kann das Erreichen der Sondenbetriebsbereitschaft verzögerungsfrei erkannt werden. Der Sondeninnenwiderstand wird durch Beaufschlagung der Sonde mit einem gepulsten Strom gemessen. Um negative Auswirkungen der Innenwiderstandsmessung im Sinne einer Polarisation der Sonde zu vermeiden, wird erfindungsgemäß die Frequenz der angelegten Strompulse in Abhängigkeit von dem Zustand der Sonde gewählt. Vorzugsweise wird die Frequenz dabei so gewählt bzw. wird die Innenwiderstandsmessung derart aktiviert, dass das Sondensignal möglichst wenig beeinflusst wird. Die Anpassung der Frequenz des gepulsten Stroms erlaubt eine Messung des Innenwiderstands bereits ab Motorstart, wobei in diesem Fall der gepulste Strom mit einer niedrigen oder sehr niedrigen Frequenz angelegt wird. Die Variation der Frequenz der Strompulse kann dabei so realisiert werden, dass die Pulsdauer jeweils konstant gehalten wird und die Abstände zwischen den Pulsen verändert werden. Beispielsweise kann die Pulsdauer 3 ms und die Zeitdauer zwischen dem Beginn eines jeden Pulses 600 ms betragen. Durch die Verkürzung der Zeitdauern zwischen dem Beginn der einzelnen Pulse wird die Frequenz beispielsweise erhöht.

In besonders bevorzugter Weise kann der Innenwiderstand erst nach Ablauf einer bestimmten bzw. vorgebbaren Zeit gemessen werden, d.h. vor Ablauf dieser Zeit ist die Frequenz der Strompulse gleich 0. Nach Ablauf dieser bestimmten Zeit kann davon ausgegangen werden, dass die Sonde bereits so warm ist, dass der Polarisationseinfluss zu vernachlässigen ist.

Mit besonderem Vorteil wird die Innenwiderstandsmessung erst dann gestartet, das heißt die Frequenz der Strompulse wird von 0 auf größer 0 gesetzt, wenn eine oder mehrere Messgrößen oder modulierte Größen darauf hindeuten, dass die Sonde so warm ist, dass der Polarisationseinfluss vernachlässigbar ist. Als Kriterium hierfür können beispielsweise Absolutwerte, Gradienten oder Integrale von Abgaskenngrößen oder Sondenkenngrößen dienen. Sobald anhand dieser Größen auf eine Mindesttemperatur der Sonde geschlossen werden kann, wird die Innenwiderstandsmessung aktiviert und durchgeführt. Beispielsweise kann hierfür eine Frequenz der Strompulse von 2 Hz angelegt werden. Die damit messbaren Innenwiderstandswerte werden dahingehend überprüft, ob eine vorgebbare Schwelle unterschritten wird, sodass dann auf die Betriebsbereitschaft der Sonde geschlossen werden kann. Mit besonderem Vorteil wird kurz vor Erreichen der Betriebsbereitschaft die Messfrequenz erhöht, beispielsweise auf 10 Hz. Hierdurch kann die Schnelligkeit des Verfahrens zur Erkennung der Betriebsbereitschaft wesentlich erhöht werden, sodass die erreichte Betriebsbereitschaft wesentlich schneller erkannt wird. Nachdem die Betriebsbereitschaft erkannt wurde, ist es im Allgemeinen ausreichend, mit einer niedrigeren Frequenz, beispielsweise 2 Hz, den Innenwiderstand zu messen.

In einer besonders bevorzugten Ausführungsform wird bis zum Erreichen eines Kriteriums, das darauf hindeutet, dass das Erreichen der Sondenbetriebsbereitschaft kurz bevorsteht, mit einer niedrigen Frequenz, beispielsweise 1 Hz, gemessen. Hierdurch wird der Polarisationseinfluss auf die Sonde niedrig gehalten. Sobald anzunehmen ist, dass die Betriebsbereitschaft in Kürze erreicht ist, wird die Frequenz der Innenwiderstandsmessung erhöht, beispielsweise auf 10 Hz. In dieser entscheidenden Phase wird also die Generierung von Messwerten beschleunigt, sodass die erreichte Betriebsbereitschaft nahezu verzögerungsfrei erkannt werden kann. Nach feststellbarer Betriebsbereitschaft kann wieder mit einer niedrigeren Frequenz, beispielsweise 2 Hz, gemessen werden.

In besonders bevorzugter Weise kann die Frequenz nach dem erstmaligen Erreichen des Kriteriums für die Sondenbetriebsbereitschaft, also nach dem Unterschreiten einer vorgebbaren Innenwiderstandsschwelle, noch einmal erhöht werden, beispielsweise auf 20 Hz. Mit dieser Vorgehensweise kann eine Plausibilisierung der erkannten Betriebsbereitschaft in sehr kurzer Zeit vorgenommen werden. Nach der Plausibilisierung wird die Sonde als betriebsbereit bewertet. Anschließend kann wieder mit einer niedrigeren Frequenz, beispielsweise 2 Hz, weiter gemessen werden.

Durch diese an den jeweiligen Sondentyp angepasste Aktivierung und Frequenz der Innenwiderstandsmessung kann der Einfluss auf die Sondenspannung minimiert werden, insbesondere wird der mit der Innenwiderstandsmessung einhergehende Polarisationseffekt der Sonde so gering wie möglich gehalten. Hierbei nutzt das erfindungsgemäße Verfahren einerseits die Zuverlässigkeit einer Innenwiderstandsmessung der Sonde als Kriterium für die Betriebsbereitschaft bzw. für die Temperatur der Sonde. Andererseits wird das Sondensignal so wenig wie möglich durch die Innenwiderstandsmessung beeinflusst und verzerrt.

Die Robustheit der Erkennung der Betriebsbereitschaft kann in besonders vorteilhafter Weise optimiert werden, wenn die Sonde nicht schon aufgrund einer einzigen Messung, bei der der gemessene Innenwiderstand die vorgebbare Schwelle unterschreitet, als betriebsbereit bewertet wird, sondern erst dann, wenn der Innenwiderstand die Schwelle bei mehreren aufeinanderfolgenden Messungen jeweils unterschreitet. Um die Zeit, die für die Plausibilisierung in Form von mehreren aufeinanderfolgenden Messungen notwendig ist, zu verkürzen, ist es in besonders vorteilhafter Weise vorgesehen, die Frequenz der Innenwiderstandsmessung zu erhöhen, sobald der erste Messwert die Schwelle unterschreitet.

Die Durchführung des erfindungsgemäßen Verfahrens wird in beispielhafter Weise im Folgenden anhand des in **Figur 1** gezeigten schematischen Ablaufs der Betriebsbereitschaftserkennung bei einer Sprung-Lambdasonde erläutert. Nach dem Motorstart (Zeitpunkt 1) wird die Innenwiderstandsmessung mit einer niedrigen Frequenz der Strompulse, beispielsweise 1 Hz, aktiviert. Wenn der Innenwiderstand unter 1 kOhm fällt, wird die Frequenz auf 10 Hz erhöht (Zeitpunkt 2). Bei Unterschreiten der Schwelle von 1 kOhm steht das Erreichen der Sondenbetriebsbereitschaft kurz bevor. Durch die Erhöhung der Frequenz werden in kurzer Folge Messwerte generiert, sodass die Betriebsbereitschaft sehr schnell erkannt werden kann. Die Sonde ist zu diesem Zeitpunkt bereits so heiß, dass eine Polarisation, die durch die Innenwiderstandsmessung verursacht wird, innerhalb von 100 ms vollständig abklingt. Wenn der Innenwiderstand unter 400 Ohm fällt, wird die Frequenz auf 20 Hz erhöht (Zeitpunkt 3). Durch die Erhöhung der Messfrequenz zu diesem Zeitpunkt kann das Messergebnis schnellstmöglich plausibilisiert werden. Die Sonde ist zu diesem Zeitpunkt bereits so heiß, dass die Polarisation innerhalb von 50 ms vollständig abklingt. Die Betriebsbereitschaft der Sonde wird angezeigt, wenn der Innenwiderstand beispielsweise bei drei aufeinanderfolgenden Messungen jeweils kleiner als 400 Ohm war (Zeitpunkt 4). Anschließend kann die Frequenz der Innenwiderstandsmessung beispielsweise auf 2 Hz reduziert werden. Dies ist für Diagnosezwecke und die Sondenheizungsregelung im Allgemeinen ausreichend.

## Patentansprüche

1. Verfahren zur Erkennung der Betriebsbereitschaft einer Sprung-Lambdasonde, die einer Brennkraftmaschine zugeordnet ist, **dadurch gekennzeichnet, dass** der Innenwiderstand der Sonde als Kriterium für die Betriebsbereitschaft der Sonde erfasst wird, wobei der Innenwiderstand durch Beaufschlagung der Sonde mit einem gepulsten Strom gemessen wird, dessen Frequenz in Abhängigkeit von dem Zustand der Sonde gewählt wird (1, 2, 3, 4).

2. Verfahren nach Anspruch 1, **dadurch gekennzeichnet, dass** als Frequenz des gepulsten Stroms eine niedrige (1) und/oder eine höhere (2) und/oder eine weiter erhöhte Frequenz (3) gewählt wird.

3. Verfahren nach Anspruch 2, umfassend die folgenden Verfahrensschritte:
- nach dem Start der Brennkraftmaschine wird der Innenwiderstand mit einer niedrigen Frequenz des gepulsten Stroms gemessen (1) und anhand der Messwerte wird überprüft, ob auf eine kurz bevorstehende Betriebsbereitschaft der Sonde zu schließen ist,
- sobald auf eine kurz bevorstehende Betriebsbereitschaft der Sonde zu schließen ist, wird der Innenwiderstand mit einer höheren Frequenz des gepulsten Stroms gemessen (2, 3) und
- es wird auf das Erreichen der Betriebsbereitschaft der Sonde geschlossen, wenn der gemessene Innenwiderstand eine vorgebbare Schwelle unterschreitet (4).

4. Verfahren nach Anspruch 3, **dadurch gekennzeichnet, dass** nach dem Start der Brennkraftmaschine und vor der Messung des Innenwiderstands ein oder mehrere Messgrößen und/oder modellierte Größen dahingehend ausgewertet werden, ob eine vorgebbare Mindesttemperatur der Sonde erreicht ist, wobei nach dem Erreichen der Mindesttemperatur die Messung des Innenwiderstands gestartet wird.

5. Verfahren nach einem der Ansprüche 2 bis 4, **dadurch gekennzeichnet, dass** zur Plausibilisierung der erreichten Betriebsbereitschaft eine weitere Innenwiderstandsmessung mit der weiter erhöhten Frequenz (3) des gepulsten Stroms durchgeführt wird.

6. Verfahren nach einem der Ansprüche 2 bis 5, **dadurch gekennzeichnet, dass** nach einem Rückschluss auf das Erreichen der Betriebsbereitschaft der Innenwiderstand mit der niedrigen Frequenz (4) des gepulsten Stroms gemessen wird.

7. Verfahren nach einem der Ansprüche 2 bis 6, **dadurch gekennzeichnet, dass** die niedrige Frequenz (1, 4) circa 0,5 bis circa 5 Hz, vorzugsweise circa 1 bis circa 3 Hz ist.

8. Verfahren nach einem der Ansprüche 2 bis 7, **dadurch gekennzeichnet, dass** die höhere Frequenz (2) circa 5,5 bis circa 15 Hz, vorzugsweise circa 8 bis circa 12 Hz ist.

9. Verfahren nach einem der Ansprüche 2 bis 8, **dadurch gekennzeichnet, dass** die weiter erhöhte Frequenz (3) circa 15,5 bis circa 25 Hz, vorzugsweise circa 18 bis circa 22 Hz ist.

10. Verfahren nach einem der Ansprüche 4 bis 9, **dadurch gekennzeichnet, dass** die ein oder mehreren Messgrößen und/oder modellierten Größen Absolutwert, Gradienten und/oder Integrale von Abgaskenngrößen, beispielsweise Temperaturen und/oder Massenströme, oder von Sondenkenngrößen, beispielsweise der Sondenspannung, sind.

11. Verfahren nach einem der vorhergehenden Ansprüche, **dadurch gekennzeichnet, dass** zum Rückschluss auf das Erreichen der Betriebsbereitschaft der Sonde geprüft wird, ob der gemessene Innenwiderstand eine vorgebbare Schwelle unterschreitet, insbesondere bei mehreren Messungen unterschreitet.

12. Verfahren nach Anspruch 11, **dadurch gekennzeichnet, dass** die mehreren Messungen aufeinanderfolgende Messungen sind.

13. Verfahren nach Anspruch 11 oder Anspruch 12, **dadurch gekennzeichnet, dass** die Frequenz des gepulsten Stroms nach erstmaligem Unterschreiten der vorgebbaren Schwelle erhöht wird.

14. Computerprogramm, das alle Schritte eines Verfahrens gemäß einem der Ansprüche 1 bis 13 ausführt, wenn es auf einem Rechengerät oder einem Steuergerät ausgeführt wird.

15. Computerprogrammprodukt mit Programmcode, der auf einem maschinenlesbaren Träger gespeichert ist, zur Durchführung eines Verfahrens gemäß einem der Ansprüche 1 bis 13, wenn das Programm auf einem Rechengerät oder einem Steuergerät ausgeführt wird.

## Claims

1. Method for detecting the operational readiness of a jump lambda sensor associated with an internal combustion engine, **characterized in that** the internal resistance of the sensor is determined as the criterion for operational readiness of the sensor, the internal resistance being measured by applying a pulsed current to the sensor, the frequency of which current is selected as a function of the state of the sensor (1, 2, 3, 4).

2. Method according to Claim 1, **characterized in that** a low (1) and/or a higher (2) and/or a further increased frequency (3) is selected as the frequency of the pulsed current.

3. Method according to Claim 2, comprising the following process steps:
- after the internal combustion engine has been started the internal resistance is measured with a low frequency of the pulsed current (1) and it is checked with reference to the measurement values whether an imminent operational readiness of the sensor can be inferred,
- as soon as an imminent operational readiness of the sensor can be inferred the internal resistance is measured with a higher frequency of the pulsed current (2, 3), and
- the attainment of operational readiness of the sensor is inferred when the measured internal resistance falls below a predefinable threshold (4) .

4. Method according to Claim 3, **characterized in that**, after the internal combustion engine has been started and prior to measurement of the internal resistance, one or more measurement values and/or modeled values is/are evaluated in order to determine whether a predefinable minimum temperature of the sensor has been reached, measurement of the internal resistance being started after the minimum temperature has been reached.

5. Method according to any one of Claims 2 to 4, **characterized in that**, in order to check the plausibility of the operational readiness attained, a further internal resistance measurement is carried out with the further increased frequency (3) of the pulsed current.

6. Method according to any one of Claims 2 to 5, **characterized in that**, after attainment of operational readiness has been inferred, the internal resistance is measured with the low frequency (4) of the pulsed current.

7. Method according to any one of Claims 2 to 6, **characterized in that** the low frequency (1, 4) is from approximately 0.5 to approximately 5 Hz, preferably from approximately 1 to approximately 3 Hz.

8. Method according to any one of Claims 2 to 7, **characterized in that** the higher frequency (2) is from approximately 5.5 to approximately 15 Hz, preferably from approximately 8 to approximately 12 Hz.

9. Method according to any one of Claims 2 to 8, **characterized in that** the further increased frequency (3) is from approximately 15.5 to approximately 25 Hz, preferably from approximately 18 to approximately 22 Hz.

10. Method according to any one of Claims 4 to 9, **characterized in that** the one or more measurement values and/or modeled values is/are absolute values, gradients and/or integrals of exhaust gas parameters, for example temperatures and/or mass flows, or of sensor parameters, for example the sensor voltage.

11. Method according to any one of the preceding claims, **characterized in that**, in order to infer attainment of operational readiness of the sensor, it is checked whether the measured internal resistance falls below a predefinable threshold, in particular in a plurality of measurements.

12. Method according to Claim 11, **characterized in that** the plurality of measurements are successive measurements.

13. Method according to Claim 11 or Claim 12, **characterized in that** the frequency of the pulsed current is increased after the predefinable threshold has been undershot for the first time.

14. Computer program which executes all the steps of a method according to any one of Claims 1 to 13 when it is run on a computer or a control device.

15. Computer program product with program code which is stored on a machine-readable carrier for executing a method according to any one of Claims 1 to 13 when the program is run on a computer or a control device.

## Revendications

1. Procédé d'identification de l'aptitude au fonctionnement d'une sonde lambda à saut qui est associée à un moteur à combustion interne, **caractérisé en ce que** la résistance interne de la sonde est détectée en tant que critère d'aptitude au fonctionnement de la sonde, dans lequel la résistance interne est mesurée en appliquant à la sonde un courant pulsé dont la fréquence est sélectionnée (1, 2, 3, 4) en fonction de l'état de la sonde.

2. Procédé selon la revendication 1, **caractérisé en ce qu'**on sélectionne en tant que fréquence du courant pulsé une fréquence basse (1) et/ou une fréquence plus élevée (2) et/ou une autre fréquence accrue (3).

3. Procédé selon la revendication 2, comprenant les étapes de procédé consistant à :
- après la mise en marche du moteur à combustion interne, mesurer la résistance interne pour une fréquence basse du courant pulsé (1) et vérifier sur la base de la valeur de mesure s'il est possible de conclure à une aptitude au fonctionnement imminente de la sonde,
- dès qu'il est possible de conclure à une aptitude au fonctionnement imminente de la sonde, mesurer (2, 3) la résistance interne à une fréquence plus élevée du courant pulsé, et
- conclure que la sonde est apte à fonctionner lorsque la résistance interne mesurée s'abaisse (4) en dessous d'un seuil pouvant être prédéfini.

4. Procédé selon la revendication 3, **caractérisé en ce qu'**après le démarrage du moteur à combustion interne, et avant la mesure de la résistance interne, on évalue une ou plusieurs grandeurs de mesure et/ou grandeurs modélisées pour déterminer si une température minimum pouvant être prédéterminée est atteinte, la mesure de la résistance interne étant commencée après que la température minimum a été atteinte.

5. Procédé selon l'une quelconque des revendications 2 à 4, **caractérisé en ce que**, pour rendre plausible le fait que l'aptitude au fonctionnement a été atteinte, une mesure supplémentaire de la résistance interne est effectuée à l'autre fréquence accrue (3) du courant pulsé.

6. Procédé selon l'une quelconque des revendications 2 à 5, **caractérisé en ce que**, après qu'il a été conclu une aptitude au fonctionnement, on mesure la résistance interne à la fréquence basse (4) du courant pulsé.

7. Procédé selon l'une quelconque des revendications 2 à 6, **caractérisé en ce que** la fréquence basse (1, 4) est d'environ 0,5 à environ 5 Hz, et de préférence, d'environ 1 à environ 3 Hz.

8. Procédé selon l'une quelconque des revendications 2 à 7, **caractérisé en ce que** la fréquence plus élevée (2) est d'environ 5,5 à environ 15 Hz, et de préférence, d'environ 8 à environ 12 Hz.

9. Procédé selon l'une quelconque des revendications 2 à 8, **caractérisé en ce que** l'autre fréquence accrue (3) est d'environ 15,5 à environ 25 Hz, et de préférence, d'environ 18 à environ 22 Hz.

10. Procédé selon l'une quelconque des revendications 4 à 9, **caractérisé en ce que** lesdites une ou plusieurs grandeurs de mesure et/ou grandeurs modélisées sont des valeurs absolues, des gradients et/ou des intégrales de caractéristiques de gaz d'échappement, par exemple des températures et/ou des débits massiques, ou des grandeurs caractéristiques de sondes, par exemple la tension de sonde.

11. Procédé selon l'une quelconque des revendications précédentes, **caractérisé en ce que**, pour conclure que l'aptitude au fonctionnement de la sonde a été atteinte, il est vérifié si la résistance interne mesurée s'abaisse en dessous d'un seuil pouvant être prédéterminé, notamment lorsque plusieurs mesures sont effectuées.

12. Procédé selon la revendication 11, **caractérisé en ce que** la pluralité de mesures sont des mesures consécutives.

13. Procédé selon la revendication 11 ou la revendication 12, **caractérisé en ce que** la fréquence du courant pulsé est augmentée après qu'il s'est abaissé une première fois en dessous du seuil pouvant être prédéterminé.

14. Programme informatique mettant en oeuvre la totalité des étapes d'un procédé selon l'une quelconque des revendications 1 à 13 lorsqu'il est exécuté sur un calculateur ou un appareil de commande.

15. Produit de programme informatique comportant un code de programme stocké sur un support lisible par machine, destiné à mettre en oeuvre un procédé selon l'une quelconque des revendications 1 à 13 lorsque le programme est exécuté sur un calculateur ou un appareil de commande .
